# EUROPÄISCHE PATENTANMELDUNG

(11) **EP 1 031 792 A2**
(43) Veröffentlichungstag der Anmeldung: **30.08.2000**
(21) Anmeldenummer: 00101749.0
(22) Anmeldetag: 28.01.2000
(51) Int. Cl.: F23N 1/00

(54) **Gasregelvorrichtung mit einem direkt modulierenden Gasregelventil**

(30) Priorität: 25.02.1999 DE 19907998
(71) Anmelder: KARL DUNGS GMBH & CO., D-73660 Urbach (DE)
(72) Erfinder: Schickler, Martin, 73614 Schorndorf (DE); Mattes, Gerd, 73614 Schorndorf (DE); De Haas, Stephanus, 1325 PC Almere (NL)
(74) Vertreter: KOHLER SCHMID + PARTNER

(57) **Zusammenfassung**

Bei einer Gasregelvorrichtung (20) mit einem Gasregelventil (1), welches einen Gaseintrittsraum (2), einen Gasaustrittsraum (3) und dazwischen eine Ventilöffnung (4) mit einem ringförmigen Ventilsitz (5) für einen über einen Magnetantrieb (Magnetspule 8) stellbaren Ventilteller (6) aufweist, ist die mit dem Ventilteller (6) zusammenwirkende Schließfläche des Ventilsitzes (5) in Durchströmrichtung (10) des Gases gerichtet und der Ventilteller (6) im Gasaustrittsraum (3) vorgesehen. So läßt sich zumindest der Einfluß des im Gaseintrittsraum herrschenden Eingangsdruckes auf das Öffnungs- und Schließverhalten des Gasregelventils verringern.

## Beschreibung

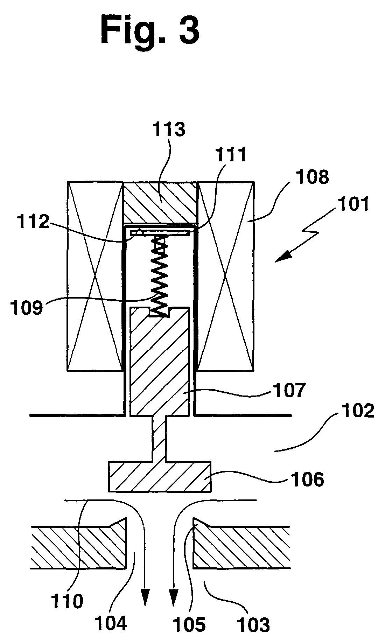

In **Fig. 3** ist der typische Aufbau eines bei bekannten Gasregelvorrichtungen vorgesehenen Gasregelventils **101** schematisch dargestellt.

Das bekannte Gasregelventil 101 ist in einen Gaseintrittsraum **102** und einen Gasaustrittsraum **103** durch eine Ventilöffnung **104** mit einem ringförmigen Ventilsitz **105** unterteilt, mit dem ein im Gaseintrittsraum 102 beweglich geführter Ventilteller **106** zusammenwirkt. Mit dem Ventilteller 106 ist ein Magnetanker **107** verbunden, der längsverschiebbar geführt und in einen Magnetantrieb (Magnetspule **108**) ragt. Bei Erregung der Magnetspule 108 wird der Magnetanker 107 gegen die Wirkung einer Schließfeder **109** weiter ins Spuleninnere gezogen und damit der Ventilteller 106 von seinem Ventilsitz 105 abgehoben. Das Gas kann zwischen Ventilsitz 105 und Ventilteller 106 durch die Ventilöffnung 104 in den Gasaustrittsraum 103 ausströmen, wobei es, wie die Strömungspfeile **110** zeigen, um ca. 90° umgelenkt wird.

Über den in der Magnetspule 108 fließenden elektrischen Strom läßt sich die Magnetkraft und damit der für das durchströmende Gas wirksame Strömungsquerschnitt über den Hub des Ventiltellers 106 einstellen. Der Magnetanker 107 ist in seinem Aufwärtshub durch eine nicht-magnetische Scheibe **111** von der Anlage am Pol **112**, welcher durch ein Magnetschlußteil **113** gebildet ist, abgegrenzt. Dadurch wird ein Kleben des Magnetankers 107 durch Restmagnetkräfte nach dem Abschalten der Magnetspule 108 verhindert.

Das bekannte Gasregelventil wird gegen das anströmende Gas geöffnet, so daß die Öffnungs- bzw. Schließkraft des Gasregelventils von dem im Gaseintrittsraum herrschenden Eingangsdruck abhängt. Durch den zwischen Ventilsitz und Ventilteller hindurchströmenden, in den Gasaustrittsraum umgelenkten Gasstrom wirkt auf den Ventilteller, zumindest wenn er nur geringfügig vom Ventilsitz abgehoben ist, eine zusätzliche Schließkraft. Da die auf den Magnetanker wirkenden Magnetkräfte mit seiner Annäherung an den Pol ansteigen, schnappt der Magnetanker ab einem gewissen Öffnungshub selbsttätig weiter aufwärts bis in Anlage an die nichtmagnetische Scheibe. Insgesamt führen diese Effekte zu langsamen Ansprechzeiten des Gasregelventils und zu einer unerwünschten unregelmäßigen Kennlinie.

Der Erfindung liegt demgegenüber die Aufgabe zugrunde, eine Gasregelvorrichtung der eingangs genannten Art dahingehend weiterzubilden, daß zumindest der Einfluß des im Gaseintrittsraum herrschenden Eingangsdruckes auf das Öffnungs- und Schließverhalten des Gasregelventils verringert ist.

Diese Aufgabe wird erfindungsgemäß dadurch gelöst, daß die mit dem Ventilteller zusammenwirkende Schließfläche des Ventilsitzes in Durchströmrichtung des Gases gerichtet ist und daß der Ventilteller im Gasaustrittsraum vorgesehen ist.

Der mit der Erfindung erzielte Vorteil besteht darin, daß das Gasregelventil mit dem anströmenden Gas geöffnet wird. Ein Schließen des Gasregelventils bei nur geringfügig abgehobenem Ventilteller, wie es bei dem oben beschriebenen bekannten Gasregelventil auftreten kann, ist durch die Umkehr der Strömungsrichtung verhindert.

Die erfindungsgemäße Gasregelvorrichtung beinhaltet ein direkt modulierendes Gasregelventil, d.h., die Ausgangsdruckveränderung braucht nicht wie bisher über einen auf ein Servostellglied wirkenden Proportionalmagneten herbeigeführt zu werden, sondern der Magnetantrieb (Proportionalmagnet) bewegt direkt den Ventilteller. Dies hat den Vorteil, daß wesentlich weniger Bauteile benötigt werden. Das System kommt ohne Druckreglerteil aus, da dieses je nach Anwendung nicht nötig ist.

Bei besonders bevorzugten Ausführungsformen der Erfindung ist das Gasregelventil ein an sich bekanntes Gasregelventil, dessen Gaseintritts- und Gasaustrittsraum vertauscht angeschlossen sind. Der Einsatz eines bekannten Gasregelventils mit vertauschten Anschlüssen in der erfindungsgemäßen Gasregelvorrichtung hat den großen Vorteil, daß zu seiner Herstellung und Bearbeitung auf die bereits vorhandenen Werkzeuge des bekannten Regelventils zurückgegriffen werden kann.

Möglicherweise ist es dazu erforderlich, die Schließkraft des bekannten Gasregelventils zu verringern. Dabei kann insbesondere die auf den Ventilteller wirkende Schließfeder gegenüber dem bekannten Gasregelventil verringert sein, z.B. indem diese Schließfeder mit größerer Federlänge eingebaut ist.

Um ein Schnappen des Magnetankers in Richtung Pol zu verhindern, ist bei bevorzugten Ausführungsformen ein Anschlag für den Anker oder den Ventilteller vorgesehen, durch den der Magnetanker aus dem Bereich ansteigender Magnetkräfte herausgehalten ist. Im einfachsten Fall ist dieser Anschlag durch eine nichtmagnetische Scheibe gebildet, die sich zwischen Pol und Magnetanker befindet.

Von besonderem Vorteil ist es, wenn dem Gasregelventil eine Drosseleinrichtung vorgeordnet ist, da so der maximal möglichen Ausgangsdruck des Gasregelventils vorgegeben ist. Um dem Gasregelventil auch einen minimalen Ausgangsdruck vorzugeben, kann parallel zum Gasregelventil ebenfalls eine Drosseleinrichtung angeordnet sein. Das Gasregelventil dient dann lediglich zum Einstellen eine dazwischenliegenden Druckes.

Um geforderte Normen zu erfüllen, wird das Gasregelventil vorzugsweise in Serie zu Sicherheitsabsperreinheiten betrieben. Dazu sollten im Gasstrom mindestens eine Sicherheitsabsperreinheit, vorzugsweise zwei Sicherheitsventile vorgesehen sein.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: ein Ausführungsbeispiel eines Gasregelventils einer erfindungsgemäßen Gasregelvorrichtung;
- Fig. 2: die Prinzipskizze einer erfindungsgemäßen Gasregelvorrichtung; und
- Fig. 3: ein Gasregelventil nach dem Stand der Technik in einer der Fig. 1 entsprechenden Ansicht.

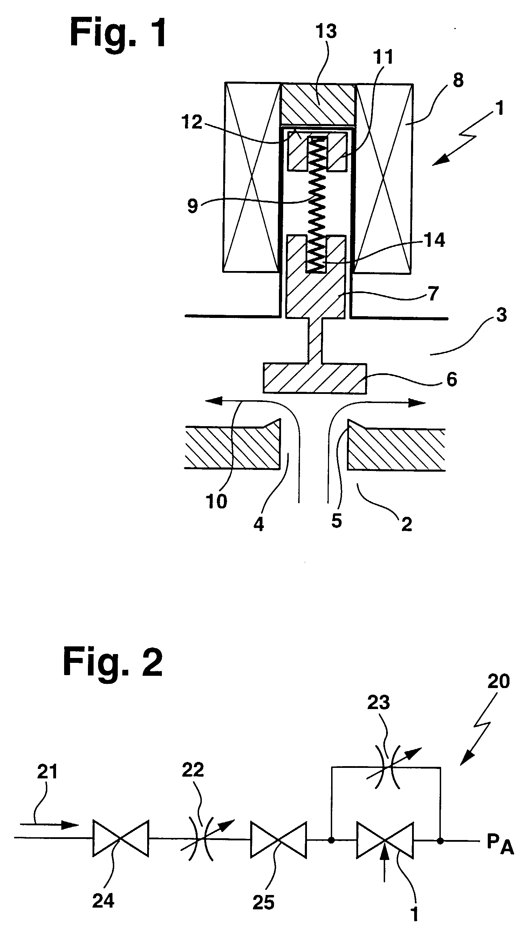

Das in **Fig. 1** gezeigte Gasregelventil **1** weist einen Gaseintrittsraum **2** und einen Gasaustrittsraum **3** auf, die durch eine Ventilöffnung **4** voneinander getrennt sind. Mit dem ringförmigen Ventilsitz **5** der Ventilöffnung 4 wirkt ein im Gasaustrittsraum 3 beweglich geführter Ventilteller **6** zusammen, der mit einem Magnetanker **7** verbunden ist. Der Magnetanker 7 ist längsverschiebbar geführt und ragt in die Magnetspule **8** eines Magnetantriebs.

Bei Erregung der Magnetspule 8 wird der Magnetanker 7 gegen die Wirkung einer Schließfeder **9** weiter ins Spuleninnere gezogen und damit der Ventilteller 6 von seinem Ventilsitz 5 abgehoben. Das Gas strömt nun durch die Ventilöffnung 4 und zwischen Ventilsitz 5 und Ventilteller 6 in den Gasaustrittsraum 3 aus, wobei es dabei, wie die Strömungspfeile **10** zeigen, um ca. 90° umgelenkt wird. Die Schließfläche des Ventilsitzes 5 ist in Strömungsrichtung 10 gerichtet.

Über den in der Magnetspule 8 fließenden elektrischen Strom läßt sich die Magnetkraft und damit der für das durchströmende Gas wirksame Strömungsquerschnitt über den Hub des Ventiltellers 6 einstellen. Der Magnetanker 7 ist in seinem Aufwärtshub durch eine nichtmagnetische Scheibe **11** von dem durch ein Magnetschlußteil **13** gebildeten Pol **12** so weit beabstandet, daß er nicht unkontrolliert, insbesondere nicht selbsttätig, in Richtung Pol 12 bzw. in Anlage an die Scheibe 11 schnappen kann.

Das bekannte Gasregelventil 101 nach Fig. 3 läßt sich zu dem in Fig. 1 gezeigten Gasregelventil 1 umrüsten, indem statt der dünnen Scheibe 111 eine dickere Scheibe 13 als Anschlag für den Magnetanker 7 und statt der Schließfeder 109 eine schwächere Schließfeder 9 verwendet wird. Dabei kann auch die gleiche Schließfeder 109 als Schließfeder 9 verwendet werden, wenn der Magnetanker 7, verglichen mit dem bekannten Magnetanker 107, eine tiefere Aufnahmebohrung **14** für die Schließfeder 9 aufweist uns so die Schließfeder 109 mit größerer Federlänge eingebaut ist.

In **Fig. 2** ist beispielhaft eine Gasregelvorrichtung **20** mit dem Gasregelventil 1 der Fig. 1 gezeigt, wobei die Strömungsrichtung des Gases mit **21** bezeichnet ist. Über eine erste Drosseleinrichtung **22** vor dem Gasregelventil 1 ist der Ausgangsgasdruck p_{A} der Gasregelvorrichtung 20 auf einen Maximaldruck begrenzt, während über eine parallel zum Gasregelventil 1 angeordnete zweite Drosseleinrichtung **23** ein minimaler Ausgangsgasdruck vorgegeben ist. Um Anforderungen von Sicherheitsnormen zu erfüllen, ist das Gasregelventil 1 in Serie zu zwei Sicherheitsabsperreinheiten **24**, **25** betrieben, die im dargestellten Ausführungsbeispiel vor dem Gasregelventil 1 und mit der ersten Drosseleinrichtung 22 zwischen sich angeordnet sind. Diese Anordnung kann als Kompaktgerät ohne zusätzlichen Verrohrungsaufwand etc. angeboten.

Die Gasregelvorrichtung 20 beinhaltet somit ein direkt modulierendes Gasregelventil 1. D.h., die Ausgangsdruckveränderung des Gases wird nicht wie bisher branchenüblich über einen auf ein Servostellglied wirkenden Proportionalmagneten herbeigeführt, sondern der Proportionalmagnet (Magnetspule 8) bewegt direkt den Ventilteller 6. Dies hat den Vorteil, daß wesentlich weniger Bauteile benötigt werden. Das Gasregelventil 1 wirkt hier wie eine steuerbare Drossel, so daß die Gasregelvorrichtung 20 ohne Druckreglerteil auskommt. Einsatzbeispiele für diese modulierende Gasregelvorrichtung 20 sind z.B. dekorative Flammeneffektgeräte, Einzelraumheizungen und andere Gasanwendungen, bei denen ein Gasdruck zwischen vorgegebenen Maximal- und Minimaldrücken eingestellt werden soll.

## Patentansprüche

1. Gasregelvorrichtung (20) mit einem Gasregelventil (1), welches einen Gaseintrittsraum (2), einen Gasaustrittsraum (3) und dazwischen eine Ventilöffnung (4) mit einem ringförmigen Ventilsitz (5) für einen über einen Magnetantrieb (Magnetspule 8) stellbaren Ventilteller (6) aufweist,
dadurch gekennzeichnet,
daß die mit dem Ventilteller (6) zusammenwirkende Schließfläche des Ventilsitzes (5) in Durchströmrichtung (10) des Gases gerichtet ist und
daß der Ventilteller (6) im Gasaustrittsraum (3) vorgesehen ist.

2. Gasregelvorrichtung nach Anspruch 1, dadurch gekennzeichnet, daß das Gasregelventil (1) ein an sich bekanntes Gasregelventil (101) ist, dessen Gaseintrittsraum (102) und Gasaustrittsraum (103) vertauscht angeschlossen sind.

3. Gasregelvorrichtung nach Anspruch 2, dadurch gekennzeichnet, daß die auf den Ventilteller (6) wirkende Schließkraft gegenüber dem bekannten Gasregelventil (101) verringert ist.

4. Gasregelvorrichtung nach Anspruch 3, dadurch gekennzeichnet, daß als Schließfeder (9) die Schließfeder (109) des bekannten Gasregelventils (101) mit größerer Federlänge eingebaut ist.

5. Gasregelvorrichtung nach einem der vorhergehenden Ansprüche, gekennzeichnet durch einen Anschlag (Scheibe 11) für den Magnetanker (7) oder den Ventilteller (6).

6. Gasregelvorrichtung nach einem der vorhergehenden Ansprüche, dadurch gekennzeichnet, daß dem Gasregelventil (1) eine erste Drosseleinrichtung (22) vorgeordnet ist.

7. Gasregelvorrichtung nach einem der vorhergehenden Ansprüche, dadurch gekennzeichnet, daß parallel zum Regelventil (1) eine zweite Drosseleinrichtung (23) angeordnet ist.

8. Gasregelvorrichtung nach einem der vorhergehenden Ansprüche, dadurch gekennzeichnet, daß die Gasregelvorrichtung (20) im Gassstrom mindestens eine Sicherheitsabsperreinheit, vorzugsweise zwei Sicherheitsabsperreinheiten (24, 25) aufweist.
